Europäisches Patentamt

(19) European Patent Office (11) Numéro de publication: **0 1 1 7 825**
**B1**
Office européen des brevets

(12) **FASCICULE DE BREVET EUROPEEN**

(45) Date de publication du fascicule du brevet:
01.04.87

(51) Int. Cl.⁴: **C 08 G 59/68,** C 08 G 59/56,
C 08 G 59/62

(21) Numéro de dépôt: **84420022.0**

(22) Date de dépôt: **08.02.84**

(54) Utilisation comme catalyseurs et accélérateurs latents de systèmes époxy-phénoliques, d'halogénobisphénates
d'amines tertiaires, leur procédé de préparation et systèmes époxy-phénoliques les contenant.

(30) Priorité: **11.02.83 FR 8302872**

(43) Date de publication de la demande:
**05.09.84 Bulletin 84/36**

(45) Mention de la délivrance du brevet:
**01.04.87 Bulletin 87/14**

(84) Etats contractants désignés:
**AT BE CH DE FR GB IT LI LU NL SE**

(56) Documents cités:
**FR - A - 1 282 310**
**FR - A - 1 514 893**
**US - A - 3 366 600**
**US - A - 3 519 576**

**Le dossier contient des informations techniques
présentées postérieurement au dépôt de la demande et
ne figurant pas dans le présent fascicule.**

(73) Titulaire: **MANUFACTURE DE PRODUITS CHIMIQUES
PROTEX Société anonyme dite:, 2, place Joffre,
Paris 7ème, Seine (FR)**

(72) Inventeur: **Tesson, Gérard, Les Prés de Saint-Aubin
Auzouer-en-Touraine, F-37110 Châteaurenault (FR)**
Inventeur: **Joseph, Christian, 7 avenue des Tilleuls
Villedomer, F-37110 Châteaurenault (FR)**

(74) Mandataire: **Colas, Jean-Pierre et al, Cabinet de
Boisse 37, avenue Franklin Roosevelt, F-75008 Paris
(FR)**

## Description

La présente invention concerne l'utilisation d'halogénobisphénates d'amines tertiaires comme catalyseurs et accélérateurs latents de systèmes époxy dont le durcisseur principal est une résine novolaque phénolique ou crésylique éventuellement halogénée, un procédé de préparation de ces halogénobisphénates et les systèmes époxy-phénoliques contenant ces catalyseurs.

Les amines tertiaires constituent des catalyseurs bien connus pour accélérer le durcissement des résines époxy liquides ou solides. On peut citer en particulier la benzyldiméthylamine, le 2-(diméthylaminométhyl)phénol, le 2-4-6-tris(diméthylaminométhyl)phénol, la triéthanolamine. Ces amines tertiaires ont en commun la propriété d'être très réactives à température ambiante et par suite de donner, avec les résines époxy, des vies en pots limitées de quelques minutes à quelques heures. Par ailleurs, ces amines tertiaires sont généralement irritantes et hygroscopiques.

On a également trouvé que certains sels d'amines tertiaires permettrent d'accroître notablement la vie en pot des systèmes époxy. Parmi ces sels d'amines tertiaires, un des plus utilisés est le tri-2-éthylhéxoate du 2-4-6-tris (diméthylaminométhyl)phénol. Ces sels présentent, par rapport aux amines tertiaires correspondantes, l'avantage d'être moins réactifs sans que ceci nuise trop aux caractéristiques finales du système après durcissement, mais ils se présentent généralement sous la forme liquide, ce qui en interdit pratiquement l'utilisation dans les système époxy solides. Par ailleurs, la plupart de ces sels sont solubles dans l'eau, ce qui complique le procédé de préparation; ils présentent en outre une odeur forte assez semblable à celle de l'amine dont ils dérivent et sont, le plus souvent, irritants. Le plus grave défaut de ces sels d'amines est leur hygroscopicité qui en interdit l'emploi pour de nombreuses applications.

Un certain progrès a été réalisé avec la préparation de produits insolubles dans l'eau et sans odeur gênante que sont les sels d'amines tertiaires des acides tétrachlorophtalique et tétrabromophtalique tels que ceux décrits dans le brevet US-A-3 497 524. Ces sels d'amines tertiaires, utilisés comme catalyseurs, permettent la préparation de systèmes époxy possédant un temps de stockage prolongé à température ambiante et une bonne vitesse de durcissement à des températures de l'ordre de 120 à 250 °C. Dans ce cas, la partie acide du composé bloque et désactive le groupe amine tertiaire, ce qui favorise la stabilité à froid du système. A chaud, il y a dissociation du sel avec libération de l'amine tertiaire qui catalyse la réaction époxy sur époxy, ainsi que de l'acide correspondant qui se combine à chaud avec les groupes hydroxyles présents dans le système. Il y a alors formation d'un groupe ester et libération d'une molécule d'eau. La formation d'eau au cours de la phase de durcissement, aussi minime soit-elle, constitue toujours un grave inconvénient dans le cas de système époxy (dégradation sérieuse des propriétés physiques et électriques de la résine durcie). Il convient en effet de rappeler que l'un des avantages du système époxy réside principalement dans son aptitude au durcissement sans dégagement de matière volatile.

Le brevet FR-A-1 282 310 décrit l'utilisation de certains phénates d'ammonium substitués comme accélérateurs de mélanges durcissables à base de résines époxydes et d'anhydride d'acides polycarboxyliques.

Si ces systèmes présentent un intérêt certain dans le cas de formulations liquides, ils conduisent à de graves difficultés d'emploi dans le cas de poudres (poudres à mouler ou pour des applications en lit fluidisé): il leur est reproché une hygroscopicité importante au stockage, une fluidité insuffisante à la fusion et une rigidité souvent excessive après polymérisation se traduisant par une fragilité marquée des pièces moulées.

US-A-3 519 576 décrit l'emploi de sels d'un phénol polyhydroxylé et d'une polyamine comme durcisseurs latents, activables par chauffage, de résines époxy. Les sels sont insolubles dans les résines à la température ambiante mais deviennent solubles lors du chauffage. Le sel du tétrachlorobisphénol A et de triéthylènetétramine dans un rapport molaire de 1:1 est notamment décrit. Ce brevet ne décrit pas de sel dérivant d'une amine tertiaire, les polyamines étant par définition des amines primaires et/ou secondaires.

L'emploi de résines novolaques phénoliques comme durcisseurs de systèmes époxy accélérées par des amines tertiaires a constitué un certain progrès au niveau de l'hygroscopicité et de la fluidité des poudres. Ces systèmes améliorés présentent toutefois le grave inconvénient d'évoluer rapidement au stockage; cette évolution se traduisant par une perte rapide de la fluidité au moulage. Si, par ailleurs, on réduit la dose d'accélérateurs pour augmenter la fluidité et le temps de stockage, on constate une diminution de la vitesse de durcissement incompatible avec des conditions industrielles de moulage.

La demanderesse a découvert que les halogénobisphénates d'amines tertiaires catalytiquement actives et spécifiquement associés à des durcisseurs du type novolaque phénolique, conduisent à des systèmes époxy particulièrement intéressants en ce qui concerne leur conservation prolongée au stockage, leur très grande fluidité à l'état fondu et leurs très bonnes propriétés à l'état polymérisé.

Par ailleurs, et de manière surprenante, on constate que ces halogénobisphénates d'amines tertiaires selon l'invention conduisent non seulement à une fluidité plus grande mais également à une vitesse de durcissement plus rapide du système époxy que lorsque la même amine tertiaire est utilisée seule. Cet ensemble de propriétés généralement inconciliables est particulièrement recherché de l'homme de l'art.

Ces nouveaux catalyseurs se présentent sous forme de poudres insolubles dans l'eau, sans odeur notable, ni hygroscopiques, conduisant à l'obtention de systèmes époxy particulièrement latents à température ambiante et durcissant très rapidement lorsque le système est chauffé à des températures de l'ordre de 120 à 250 °C sans formation d'eau. Ces halogénobisphénates d'amines tertiaires se dissocient en effet à chaud avec libération d'amine tertiaire et d'halogénobisphénol qui réagit immédiatement avec le groupe époxy sans formation de sous-produits.

Parmi les composés halogénobisphénolés selon l'invention, on peut citer les dérivés chlorés, bromés, iodés et fluorés du bisphénol A(diphénylolpropane), du bisphénol B (bis (hydroxy-4-phényl)-2-2 butane,) du bisphénol F (bis(hydroxy-4-phényl) méthane,) du 4,4' dihydroxydiphényl et du 4,4' dihydroxydiphényl sulfone. Parmi les composés phénolés les plus intéressants par leur prix, leur disponibilité dans le commerce, leurs caractéristiques propres et celles qu'ils confèrent au système époxy, durci, on citera plus particulièrement le tétrabromobisphénol A et le tétrachlorobisphénol A.

Parmi les amines tertiaires, toutes celles communément utilisée en l'état comme catalyseur dans les formulations d'époxy peuvent être utilisées. On peut citer, en particulier, la benzyldiméthylamine, le 2-(diméthylaminométhyl)phénol, le 2,4,6-tris(diméthylaminométhyl)phénol, la triéthylamine, la triéthanolamine, la triéthylènediamine, l'imidazole, l'isopropylimidazole, le 2-éthyl-4 méthylamidazole, etc.

Ces halogénobisphénates d'amine tertiaire sont préparés, selon l'invention, par réaction en phase aqueuse hétérogène du composé halogénobisphénolé et de l'amine tertiaire. A la dispersion du composé halogénobisphénolé dans l'eau, on ajoute l'amine tertiaire et on chauffe entre 50 et 100 °C, de préférence à 70–80 °C, durant 3 à 6 heures. Après refroidissement, filtration, lavage à l'eau, séchage à 70–80 °C on recueille l'halogénobisphénate d'amine tertiaire sous la forme d'une poudre blanchâtre, coulant librement, à peu près exempte d'odeur. Ceci contraste nettement avec les odeurs gênantes et irritantes qui caractérisent les amines tertiaires libres.

Les halogénobisphénates d'amine tertiaire selon l'invention sont caractérisés par un rapport moléculaire équivalent phénol sur équivalent amine tertiaire pouvant varier de 1 à 4, et compris de préférence entre 1,25 et 3. Un rapport de 2 convient pour la plupart des amines tertiaires; toutefois, avec les amines tertiaires faiblement basiques et de haut poids moléculaire, comme le 2,4,6-tris(diméthylaminométhyl)phénol, il est préférable d'utiliser des rapports plus faibles de 1,3.

On appelle équivalent phénol ou amine tertiaire, le nombre de groupements hydroxyle phénolique ou azote aminé tertiaire par molécule, soit 2 équivalents phénol pour le tétrabromobisphénol A, 1 et 3 équivalents amine tertiaire respectivement pour la triéthylamine et le 2,4,6-tris(diméthylaminométhyl) phénol.

Les halogénobisphénates d'amine tertiaire selon l'invention sont essentiellement non réactifs à la température ambiante avec les autres constituants de systèmes de résine époxy solides ou en poudre, ce qui permet de conserver de telle préparations solides pendant de longues périodes sans détérioration; même dans les systèmes de résines époxy liquides, les halogénobisphénates d'amine tertiaire présentent une réactivité extrêmement basse à la température ambiante. Toutefois, dans les systèmes de résines époxy tant solides que liquides, les halogénobisphénates d'amine tertiaire se comportent à peu près de la même manière que les amines tertiaires libres quand le système est chauffé à des températures de durcissement de l'ordre de 120 à 250 °C.

Ainsi, l'invention a-t-elle également pour objet les formulations de résines époxy aux caractéristiques améliorées, contenant ces halogénobisphénates comme catalyseurs et accélérateurs

On peut préparer, selon l'invention, des formulations de résines époxy aux caractéristiques améliorées, dans lesquelles le constituant résine est de préférence soit une résine de bisphénol A, soit une résine novolaque phénolique époxydée soit une résine novolaque crésylique époxydée, utilisée seule ou en association. Plus particulièrement, une résine de bisphénol A doit avoir un poids par équivalent d'époxy d'environ 170 à 300 pour les résines liquides et de 300 à 6000 pour les résines solides, une résine novolaque phénolique époxydée doit avoir un poids par équivalent d'époxy d'environ 160 à 180 pour les résines liquides et d'environ 175 à 220 pour les résines solides, une résine novolaque crésylique doit avoir un poids par équivalent d'époxy de 200 à 250 environ. Les durcisseurs de ces résines époxy accélérés par les halogénobisphénates de l'invention sont exclusivement constitués de résines novolaques phénoliques ou crésyliques éventuellement halogénées. Par résine novolaque phénolique ou crésylique on entend les produits de condensation avec catalyse acide du phénol ou du crésol avec le formaldéhyde. Ces résines novolaques se présentent sous la forme de produits liquides, semi solides à solides, avec des points de fusion pour ces dernières pouvant aller de 40° à 150 °C. La proportion du durcisseur par rapport à la résine est comprise de préférence entre 0,5 et 1 équivalent de durcisseur pour chaque équivalent époxy de résine, et la proportion d'halogénobisphénate nécessaire doit correspondre à l'introduction de 0,02 à 2% d'amine tertiaire active par rapport au poids total de résine plus durcisseur, ce qui se traduit généralement par l'addition de 0,2 à 20% en poids de catalyseur selon l'invention.

A ces formulations de résine époxy aux caractéristiques améliorées, on peut avantageusement ajouter des additifs bien connus de l'homme de l'art dans des proportions allant jusqu'à 75 à 80% environ du poids total de la formulation. Ces additifs peuvent être:

– Des charges telles que la farine de quartz, de la silice, des silicates, de la farine d'ardoise, de l'alumine hydratée, de la dolomite broyée, du talc, du sulfate, de baryum, etc . . . ou encore des matières qui servent également d'agents renforçants comme des fibres de verre (coupées ou broyées), d'amiante, de carbone et de bore, des fibres organiques, de la farine de bois, de la cellulose, des polyamides, des polyesters, du polyacrylonitrile etc. On peut également utiliser des mélanges de ces matières de charge.

— Des colorants tels que le blanc d'oxyde de titane, le jaune d'oxyde de fer, les bleus et verts de phtalocyanine, les rouges mercure, de cadmium et d'oxyde de fer, les marrons d'oxyde de fer, les noirs de carbone et d'oxyde de fer.

— Des lubrifiants et agents de démoulage, quand les formulations sont prévues pour moulage, tels que les stéarates de magnésium, de calcium, de zinc, ou le monostéarate de glycérol, l'acide stéarique, la cire d'abeille, la cire de carnauba, la cire de candelilla, la paraffine, et des cires synthétiques à base d'acides montaniques, d'amides, de polyéthylène ou de silicone.

— Des additifs spécifiques quand les formulations sont prévues pour poudre de revêtement: agents d'écoulement, de tension, anti-cratères, thioxotropes, tels que les polymères acryliques, les dérivés fluorocarbonés, les huiles époxydées, les butyrals polyvinyliques et les silices colloïdales.

La présente invention sera mieux comprise d'ailleurs à l'aide des exemples suivants qui décrivent, de façon non limitative, d'une part la préparation des nouveaux halogénobisphénates d'amine tertiaire, et d'autre part leur utilisation comme catalyseurs et accélérateurs dans les formulations de résine époxy.

Exemple 1

Dans un réacteur de 2 litres équipé d'un agitateur d'un thermomètre et d'un réfrigérant pour reflux, on charge 1000 ml d'eau, 436 g (0,8 mole soit 1,6 équivalent phénol) de tétrabromobisphénol A. On chauffe la dispersion sous forte agitation. On ajoute, au moyen d'une ampoule d'addition, 108 g (0,8 mole soit 0,8 équivalent amine tertiaire) de benzyldiméthylamine. On maintient 4 h à 80 °C. On refroidit à 20 °C. On filtre sur büchner. On lave avec 1000 ml d'eau froide. On sèche à poids constant à 70–80 °C. On recueille 537 g (soit un rendement de 98,7%) de tétrabromobisphénate A de benzyldiméthylamine sous la forme d'une poudre fine, blanche, non hygroscopique, inodore, de point de fusion 145 °C et de teneur en azote amine tertiaire de 1,95% (théorie 2,06). Dans ce cas, l'halogénobisphénate d'amine tertiaire a un rapport équivalent phénol sur équivalent amine tertiaire de 2.

Exemple 2

On opère dans les conditions de l'exemple 1 à partir de 436 g (0,8 mole soit 1,6 équivalent phénol) de tétrabromobisphénol A et 106 g (0,4 mole soit 1,2 équivalent amine tertiaire) de 2,4,6-tris-(diméthylaminométhyl)phénol. On obtient 507 g (soit un rendement de 98,7%) de tétrabromobisphénate A de 2,4,6-tris(diméhtylaminométhyl) phénol sous la forme d'une poudre jaunâtre, non hygroscopique, pratiquement inodore, de point de fusion 105 °C et de teneur en azote aminé tertiaire 2,94% (théorie 3%). Dans ce cas, l'halogénobisphénate d'amine tertiaire a un rapport équivalent phénol sur équivalent amine tertiaire de 1,33.

Exemple 3

On opère dans les conditions de l'exemple 1 à partir de 436 g (0,8 mole soit 1,6 équivalent phénol) de tétrabromobisphénol A et 119 g (0,8 mole soit 0,8 équivalent amine tertiaire) de triéthanolamine. On obtient 540 g (soit une rendement de 97,4%) de tétrabromobisphénate A de triéthanolamine sous la forme d'une poudre blanche, non hygroscopique, inodore, de point de fusion 158 °C, et de teneur en azote aminé tertiaire 1,84% (théorie 2,0%). Dans ce cas, l'halogénobisphénate d'amine tertiaire a un rapport équivalent phénol sur équivalent amine tertiaire de 2.

Exemple 4

On opère dans les conditions de l'exemple 1 à partir de 436 g (0,8 mole soit 1,6 équivalent phénol) de tétrabromobisphénol A et 88 g (0,8 mole soit 0,8 équivalent amine tertiaire) de triéthylamine. On obtient 515 g (soit un rendement de 98,5%) de tétrabromobisphénate A de triéthylamine sous la forme d'une poudre blanche, non hygroscopique, inodore, de point de fusion 187 °C et de teneur en azote aminé totale 2,01% (théorie 2,13%).

En plus des matières précédentes, (exemples 1 à 4) des produits similaires ont été préparés d'une manière identique par la réaction du tétrabromobisphénol A avec les amines suivantes:
– triéthylènediamine
– 2(diméthylaminométhyl) phénol
– imidazole
– isopropylimidazole
– 2 éthyl 4-méthylimidazole

Avec chacune de ces amines, l'halogénobisphénate obtenu a un rapport des équivalents phénol sur équivalents amine tertiaire de 2, et c'est un produit solide blanchâtre à jaunâtre, non hygroscopique, inodore.

Exemple 5

On opère dans les conditions de l'exemple 1 à partir de 292 g (0,8 mole soit 1,6 équivalent phénol) de tétrachlorobisphénate A et de 108 g (0,8 mole soit 0,8 équivalent amine tertiaire) de benzyldiméthylamine. On obtient 388 g (soit un rendement de 97,0%) de tétrachlorobisphénate A de benzyldiméthylamine sous la forme d'une poudre blanchâtre, non hydgroscopique, inodore, de point de fusion 135 °C et de teneur en azote amine tertiaire dosée de 2,8% (théorie 2,8%). Dans ce cas, l'halogénobisphénate d'amine tertiaire a un rapport équivalent phénol sur équivalent amine tertiaire de 2.

Exemple 6

On opère dans les conditions de l'exemple 1 à partir de 292 g (0,8 mole soit 1,6 équivalent phénol) de tétrabromobisphénol A et de 106 g (0,4 mole soit 1,2 équivalent amine tertiaire) de 2,4,6-tris(diméthylaminométhyl)phénol. On obtient 391 g (soit un rendement de 98,2%) de tétrachlorobisphénate A de 2,4,6-tris(diméthylaminométhyl)phénol sous la forme d'une poudre beige, non hygroscopique, pratiquement inodore, de point de fusion 164 °C et de teneur en azote aminé tertiaire dosée de 3,94% (théorie 4,06%). Dans ce cas, l'halogénobisphénate d'amine a un rapport équivalent phénol sur équivalent amine tertiaire de 1,33.

Exemple 7

On opère comme pour l'exemple 1 à partir de 228 g (1 mole soit 2 équivalent phénol) de bisphénol A et 132,5 g (0,5 mole soit 1,5 équivalent amine tertiaire) de 2,4,6-tris(diméthylaminométhyl)phénol. On recueille un produit goudronneux, filant, partiellement soluble dans l'eau, impossible à isoler sous forme de poudre, et surtout n'ayant pas la teneur finale en azote aminée tertiaire adéquate.

On répète le mode opératoire précédent avec le produit porteur de groupement phénolique suivant:
– bisphénol F (diphénylolméthane),
– Bisphénol B et 4,4'-dihydroxydiphénylsulfone.

Avec ces produits, il n'y a pas de produit solide formé. Des essais, visant à faire réagir les produits précédents avec d'autres amines tertiaires, n'ont en aucun cas permis de préparer un produit solide insoluble dans l'eau comparable aux halogénobisphénates d'amine tertiaire préparés selon l'invention comme décrit dans les exemples 1 à 6.

Ces essais infructueux illustrent clairement l'impossibilité d'obtenir des sels d'amines tertiaires sous forme de poudre insoluble dans l'eau à partir des bisphénols non halogénés. La formation de sels insolubles dans l'eau d'amines tertiaires semble donc être une propriété étonnamment spécifique des composés halogénobisphénolés.

Un avantage spécial de ces sels insolubles dans l'eau d'amines tertiaires, en plus de leur stabilité à la température ambiante, est leur nature essentiellement exempte d'odeur et non irritante, ce qui contraste fortement avec les amines tertiaires dont ils sont issus. Cependant, aux températures de durcissement des résines, les halogénobisphénates d'amine tertiaire ont sensiblement la même action catalytique ou d'accélération que les amines libres correspondantes.

Les exemples suivants illustrent des formulations de systèmes typiques de résines époxy liquides et solides utilisant des halogénobisphénates d'amine tertiaire selon l'invention.

Exemple 8

On prépare trois poudres à mouler qui contiennent toutes, comme résine de base: une résine I novolaque phénolique époxydée ayant un poids équivalent d'époxy de 178 et une fonctionnalité de 3,6 environ, et une résine II novolaque phénolique solide de point de fusion capillaire 85 °C, d'indice d'hydroxyle de 550 environ et contenant 2% de phénol libre. La poudre A contient comme catalyseur la triéthanolamine sur un tamis moléculaire (un catalyseur latent du commerce), la poudre B contenant le tétrabromobisphénate A de triéthanolamine (catalyseur latent selon l'invention) et la poudre C contenant le tétrachlorobisphénate A de triéthanolamine (catalyseur latent selon l'invention). Les formules complètes sont les suivantes:

| | Poudre A | Poudre B | Poudre C |
|---|---|---|---|
| Résine époxy I | 22 | 22 | 22 |
| Résine novolaque phénolique II | 11 | 11 | 11 |
| Stéarate de calcium | 0,25 | 0,25 | 0,25 |
| Stéarate de zinc | 0,75 | 0,75 | 0,75 |
| Pigment noir | 0,5 | 0,5 | 0,5 |
| Triéthanolamine (sur tamis moléclaire) | 2 | – | – |
| Tétrabromobisphénate A de triéthanolamine | – | 1,5 | – |
| Tétrachlorobisphénate A de triéthanolamine | – | – | 1,5 |
| Farine de silice | 60 | 60 | 60 |
| Fibre de verre | 5 | 5 | 5 |

Les poudres sont traitées comme suit: les résines I et II sont fondues ensemble aux environs de 110 °C et on les laisse refroidir à 20 °C. La matière solide résultante est broyée à l'état d'une poudre fine. Les autres ingrédients sont ajoutés et mélangés pour former une composition uniforme. Les mélanges sont ensuite fondus et densifiés sur un malaxeur commun en bandes uniformes. Quand elles sont froides, les bandes sont broyées en poudres utilisables pour le moulage par transfert.

Les poudres résultantes sont évaluées par l'essai de fluidité dit «spiral flow». C'est un essai normalisé établi par l'Epoxy Molding Materials Institue de New-York sous la référence EMMI-1-66 (Method of Test for spiral flow). Une bonne poudre à mouler de type époxy présente un assez long «spiral flow» et peu de changement dans le «spiral flow» durant des périodes prolongées de stockage. Ainsi, la variation du «spiral flow» avec l'âge et la température de stockage est-elle une mesure efficace de la stabilité d'une poudre à mouler époxy.

Les essais de «spiral flow» ont été effectués sur les poudres juste après leur fabrication, après stockage de 1 mois à 20 °C et après vieillissement accéléré de 10 heures à 43 °C, ce qui correspond environ à 3 mois de stockage à 20 °C. Les résultats sont les suivants:

| Moment de l'évaluation | Valeur du «spiral flow» en cm | | |
|---|---|---|---|
| | Poudre A | Poudre B | Poudre C |
| Juste après fabrication | 43,18 | 88,90 | 96,52 |
| Après 1 mois à 20 °C | 30,48 | 86,36 | 91,44 |
| Après vieillissement accéléré (10 h. à 43 °C) | 7,62 | 71,12 | 63,50 |

Ce tableau fait clairement apparaître que, même quand elle est fraichement préparée, la poudre à mouler contenant de la triéthanolamine sur un tamis moléculaire a un écoulement assez médiocre, qui se dégrade très rapidement en cours de stokkage. Les poudres contenant des halogénophénates de triéthanolamine présentent un écoulement initial très satisfaisant et une bonne stabilité.

Exemple 9

On prépare 4 poudres à mouler qui contiennent les mêmes résines de base que celles utilisées dans l'exemple 8. La poudre D contient une amine tertiaire libre de 2,4,6-tris(diméthylaminométhyl) phénol, adsorbée à raison de 1 partie à 3 parties en poids de silice colloïdale. La poudre E contient un sel d'amine tertiaire de la technique antérieure, la tri-2-éthylhéxoate de 2,4,6-tris(diméthylaminométhyl)phénol absorbé de la même façon sur silice colloïdale. La poudre F contient le tétrabromophénate A de 2,4,6-tris(diméthylaminométhyl) phénol (catalyseur latent selon l'invention). La poudre G contient le tétrachlorobisphénate A de 2,4,6-tris(diméthylaminométhyl)phénol. Les formules complètes sont les suivantes:

| | Poudre D | Poudre E | Poudre F | Poudre G |
|---|---|---|---|---|
| Résine époxy | 21 | 20,2 | 20,2 | 20,2 |
| Résine novolaque phénolique II | 12 | 11,6 | 11,6 | 11,6 |
| Stéarate de calcium | 1 | 1 | 1 | 1 |
| Pigment noir | 0,5 | 0,5 | 0,5 | 0,5 |
| 2,4,6-tris(diméthylaminométhyl)phénol (avec silice colloïdale) | 0,65 | – | – | – |
| Tri-2-éthylhéxoate de 2,4,6-tris-(diméthyl aminométhyl)phénol (avec silice colloïdale) | – | 1,7 | – | – |
| Tétrabromobisphénate de 2,4,6-tris-(diméthylaminométhyl)phénol | – | – | 1,7 | – |
| Tétrachlorobisphénate A de 2,4,6-tris-(diméthylaminométhyl)phénol | – | – | – | 1,7 |
| Farine de silice | 60 | 60 | 60 | 60 |
| Fibre de verre | 5 | 5 | 5 | 5 |

Les poudres sont traitées et évaluées de la mêmes façon que dans l'exemple 8.

| Moment de l'évaluation | Valeur du «spiral flow» en cm | | | |
|---|---|---|---|---|
| | Poudre D | Poudre E | Poudre F | Poudre G |
| Juste après la fabrication | 66,04 | 63,50 | 88,90 | 101,60 |
| Après 1 mois à 20 °C | 45,72 | 48,26 | 86,36 | 96,52 |
| Après 1 mois à 30 °C | 8,89 | 12,70 | 78,74 | 83,82 |
| Après vieillissement accéléré 10 à 43 °C | 15,24 | 25,40 | 76,20 | 81,28 |

Ce tableau fait clairement apparaître que la poudre à mouler renfermant l'amine tertiaire libre ainsi que la poudre renfermant le sel de la même amine (selon la technique antérieure) sont médiocrement stables quand on les conserve à 20 °C, et très instables quand on les conserve à une température tres légèrement plus élevée. En revanche, les poudres à mouler avec les halogénobisphénates de la même amine tertiaire sont parfaitement stables à 20 °C et suffisamment stables à température plus élevée.

Exemple 10

On prépare 2 poudres à mouler qui contiennent comme résine de base: une résine III novolaque phénolique époxydée solide ayant un poids équivalent d'époxy de 185, une fonctionnalité d'environ 5,5 et un point de fusion de 74 °C, et une résine II identique à celle utilisée dans les exemples 8 et 9. La poudre H contient le tétrabromobisphénate A de benzyldiméthylamine; la poudre 1 contient le tétrachlorobisphénate A de benzyldiméthylamine. Les formules complètes sont les suivantes:

|  | Poudre H | Poudre I |
|---|---|---|
| Résine époxy III | 22,8 | 22,8 |
| Résine novolaque phénolique II | 11,4 | 11,4 |
| Cire synthétique à base d'acides montaniques | 0,6 | 0,6 |
| Pigment noir | 0,5 | 0,5 |
| Tétrabromobisphénate A de benzyldiméthylamine | 1,5 | – |
| Tétrachlorobisphénate A de benzyldiméthylamine | – | 1,5 |
| Farine de silice | 63 | 63 |

Les poudres sont traitées de la façon suivante: les résines, le lubrifiant, le pigment et le catalyseur sont tous broyés à l'état d'une poudre fine. Puis on ajoute la charge et on mélange bien jusqu'à ce que le mélange soit parfaitement uniforme. Les mélanges sont ensuite fondus, densifiés et broyés comme dans l'exemple 8.

Des échantillons de ces deux poudres sont moulés par transfert à 150 °C. Le temps de gélification de la poudre H est d'environ 50 secondes, tandis que celui de la poudre I est de 60 secondes environ. De plus, les caractéristiques d'écoulement et de durcissement de ces poudres sont à peu près inchangées, après un stockage de 3 mois à la température ambiante.

Exemple 11

La formulation poudre suivante est préparée pour application par un procédé à lit fluidisé:

Résine époxy IV                                    56
Résine novolaque crésylique V                     28
Acrylron MFP poudre                                1
(agent d'écoulement fabriqué par
PROTEX) Tétrabromobisphénate A de
propylimidazole                                   1,5
Ti O2                                            13,5

La résine époxy IV est une résine multifonctionnelle (n=4) de type tétraglycidyl-1,1,2,2 (para-hydrophényl) éthane et de poids équivalent d'époxy 180.200.

La résine novoalque crésylique V est une résine solide de point de fusion 100 °C environ et de viscosité à 150 °C environ 1 000 centipoises.

Les matières en poudre de la formule ci-dessus sont mélangées intimement à sec dans un mélangeur. Le mélange est ensuite fondu, densifié et refroidi comme dans l'exemple 8. Enfin, il est broyé à moins de 250 microns. La poudre fine ainsi obtenue est fluidifiée dans un petit appareil de fluidisation de laboratoire. Une éprouvette cylindrique d'acier propre, ayant un diamètre de 2,5 cm et une longueur de 10 cm, est préchauffée à 200 °C pendant 15 minutes. L'éprouvette chaude est plongée dans le lit fluidisé pendant cinq secondes. Elle est ensuite enlevée et on détermine le temps de gélification qui est de 50 secondes. L'éprouvette et d'autres échantillons d'acier de diverses dimensions et formes sont revêtus d'une manière similiaire et ensuite complètement durcis par séjour de 10 minutes dans une étuve à 200 °C. Les revêtements obtenus sont lisses et attrayants et ont de bonnes propriétés physiques.

Exemple 12

On prépare deux poudres à mouler qui contiennent comme résine de base une résine VI novolaque crésylique époxydée solide ayant un poids équivalent d'époxy de 230 et un point de fusion de 80 °C environ, une résine VII novolaque crésylique solide de point de fusion 100 °C environ et de viscosité à 150 °C environ 1 000 centipoises. La poudre J contient en outre du tétrabromobisphénate A de triéthylènediamine, et la poudre K contient en outre du tétrachlorobisphénate A de triéthylènediamine. Les formules complètes sont les suivantes:

|  | Poudre J | Poudre K |
|---|---|---|
| Résine époxy VI | 23,5 | 23,5 |
| Résine novolaque crésy-lique VII | 11 | 11 |
| Stéarate de calcium | 0,25 | 0,25 |
| Stéarate de zinc | 0,75 | 0,75 |
| Tétrabromobisphénate A de triéthylènediamine | 1 | – |
| Tétrachlorobisphénate A de triéthylènediamine | – | 1 |
| Pigment noir | 0,5 | 0,5 |
| Farine de silice | 63 | 63 |

Les poudres sont traitées et évaluées comme dans l'exemple 10.

Le temps de gélification de la poudre J est d'environ 40 secondes, tandis que celui de la poudre K est de 50 secondes, alors que le temps de durcissement est respectivement de 1 min 30 sec et 2 min environ. De plus les caractéristiques d'écoulement et de durcissement de ces poudres sont à peu près inchangées après un stockage de 3 mois à la température ambiante.

Exemple 13

On prépare les systèmes liquides suivants:

|  | e | f | g | h |
|---|---|---|---|---|
| Résine époxy liquide VIII | 100 | 100 | – | – |
| Résine novolaque époxy liquide IX | – | – | 100 | 100 |
| Résine novolaque phénolique X | 60 | 60 | 60 | 60 |
| Tétrabromobisphénate A d'isopropylimidazole | – | 0,7 | – | 0,7 |

On dissout à chaud (environ 60 °C) le tétrabromobisphénate A d'isopropylimidazole dans la résine novolaque phénolique. Puis on mélange, toujours aux environs de 60 °C, avec les résines époxy liquides, Enfin, on place dans une étuve à 125 °C les mélanges e à h. Les mélanges e et g sont encore liquides après 6 heures à 125 °C, tandis que le mélange f se gélifie à l'état dur en 70 minutes environ et le mélange h en 90 minutes. De plus, les mélanges f et h ont une viscosité stable après un stockage d'une semaine à la température ambiante, ce qui indique la latence des halogénophénates d'amines tertiaires, mêmes dans un système liquide.

La résine époxy VIII est de type bisphénol A, poids équivalent de 180, la résine époxy liquide IX est de type novolaque phénolique époxydée, équivalent d'époxy 175 et a une fonctionnalité de 2,2 environ. La résine novolaque phénolique X est une résine semi-solide, ayant un point de fusion d'environ 52 °C et une viscosité d'environ 600 centipoises à 80 °C.

Bien entendu, l'invention n'est nullement limitée au mode de réalisation décrit qui n'a été donné qu'à titre d'exemple. En particulier, elle comprend tous les moyens constituant des équivalents techniques des moyens décrits, ainsi que leurs combinaisons, si celles-ci sont exécutées suivant son esprit et mises en œuvre dans le cadre de la protection comme revendiqué.

**Revendications**

1. Catalyseurs et accélérateurs latents pour systèmes époxy dont le durcisseur principal est une novolaque phénolique ou crésylique éventuellement halogénée, caractérisés en ce qu'ils sont des halogénobisphénates insolubles dans l'eau d'une amine tertiaire catalytiquement active.

2. Catalyseurs et accélérateurs latents selon la revendication 1, caractérisés en ce que le composé halogénobisphénolé est choisi parmi les dérivés chlorés, bromés, iodés ou fluorés du bisphénol A (diphénylolpropane) du bisphénol B (bis(hydroxy-4-phényl)-2-2- butane), du bisphénol F (bis(hydroxy-4-phényl) méthane), du 4,4'-dihydroxydiphényl et du 4,4'-dihydroxydiphénylsulfone.

3. Catalyseurs et accélérateurs latents selon la revendication 2, caractérisés en ce que le composé halogénobisphénolé est le tétrabromobisphénol A.

4. Catalyseurs et accélérateurs latents selon la revendication 2, caractérisés en ce que le composé halogénobisphénolé est le tétrachlorobisphénol A.

5. Catalyseurs et accélérateurs latents selon l'une quelconque des revendications 1 à 4, caractérisés en ce que l'amine tertiaire est choisie parmi le benzyldiméthylamine, le 2-(diméthylaminoéthyl)phénol, le 2,4,6-tris(diméthylaminométhyl)phénol, la triéthylamine, la triéthanolamine, la triéthylène diamine, l'imidazole, l'isopropylimidazole, le 2-éthyl-4-méthylimidazole.

6. Catalyseurs et accélérateurs latents selon l'une quelconque des revendications 1 à 5, caractérisés en ce que le rapport moléculaire équivalent phénol/équivalent amine tertiaire se situe entre 1 et 4.

7. Catalyseurs et accélérateurs latents selon la revendication 6, caractérisés en ce que le rapport moléculaire équivalent phénol/équivalent amine tertiaire se situe entre 1,25 et 3.

8. Procédé de préparation des halogénobisphénates d'amines tertiaires selon l'une quelconque des revendications 1 à 7, caractérisé en ce qu'il consiste à ajouter, à une dispersion aqueuse du composé halogénobisphénolé, l'amine tertiaire, puis à chauffer, le tout entre 50 °C et 100 °C pendant 3 à 6 heures, afin de recueillir, après refroidissement, filtration, lavage à l'eau et séchage à 70–80 °C, une poudre blanchâtre, coulant librement, et à peu près exempte d'odeur.

9. Utilisation d'un catalyseur et accélérateur latent tel que défini à l'une quelconque des revendications 1 à 7 dans un systmè de résine époxy contenant comme durcisseur principal, une novolaque phénolique ou crésylique, éventuellement halogénée, ledit catalyseur-accélérateur étant utilisé à raison d'environ 0,2 à 20% en poids par rapport au poids des constituant réactifs du système.

10. Utilisation selon la revendication 9, caractérisée en ce que les constituants réactifs comprennent au moins une résine époxy choisie parmi les résines époxy de bisphénol A, les novolaques phénoliques époxydées et les novolaques crésyliques époxydées.

11. Utilisation selon la revendication 9 ou 10, caractérisée en ce que le système de résine époxy contenant le catalyseur-accélérateur se trouve sous la forme d'une matière solide pulvérisée stable à la température ambiante, qui fond et durcit rapidement en une matière solide continue, dure à des températures d'environ 150 °C et au-dessus.

12. Utilisation selon la revendication 9 ou 10, caractérisée en ce que le système de résine époxy contenant le catalyseur-accélérateur se trouve sous la forme d'un liquide stable à la température ambiante, qui est rapidement durci en une matière solide, dure à des températures d'environ 120 °C et au-dessus.

## Patentansprüche

1. Latente Katalysatoren und Beschleuniger für Epoxysysteme, deren Haupthärter ein gegebenenfalls halogeniertes Phenol- oder Cresylnovolak ist, dadurch gekennzeichnet, dass sie in Wasser unlösliche Halogenobisphenolate eines katalytisch aktiven tertiären Amins sind.

2. Latente Katalysatoren und Beschleuniger nach Anspruch 1, dadurch gekennzeichnet, dass die Halogenobisphenolverbindung aus den chlorierten, bromierten, iodierten oder fluorierten Derivaten des Bisphenols A (Diphenylolpropan), des Bisphenols B (2,2-Bis(4-hydroxyphenyl) butan), des Bisphenols F (Bis(4-hydroxyphenyl)methan), des 4,4'Dihydroxydiphenyls und des 4,4'-Dihydroxydiphenylsulfons ausgewählt sind.

3. Latente Katalysatoren und Beschleuniger nach Anspruch 2, dadurch gekennzeichnet, dass die Halogenobisphenolverbindung das Tetrabromobisphenol A ist.

4. Latente Katalysatoren und Beschleuniger nach Anspruch 2, dadurch gekennzeichnet, dass die Halogenobisphenolverbindung das Tetrachlorobisphenol A ist.

5. Latente Katalysatoren und Beschleuniger nach irgendeinem der Ansprüche 1 bis 4, dadurch gekennzeichnet, dass das tertiäre Amin aus dem Benzyldimethylamin, dem 2-(Dimethylaminoethyl)phenol, dem 2,4,6-Tris(dimethylaminomethyl)phenol, dem Triethylamin, dem Triethanolamin, dem Triethylendiamin, dem Imidazol, dem Isopropylimidazol und dem 2-Ethyl-4-methylimidazol ausgewählt ist.

6. Latente Katalysatoren und Beschleuniger nach irgendeinem der Ansprüche 1 bis 5, dadurch gekennzeichnet, dass das Molekularverhältnis von Phenoläquivalent zum Äquivalent des tertiären Amins zwischen 1 und 4 liegt.

7. Latente Katalysatoren und Beschleuniger nach Anspruch 6, dadurch gekennzeichnet, dass das Molekularverhältnis von Phenoläquivalent zum Äquivalent des tertiären Amins zwischen 1,25 und 3 liegt.

8. Verfahren zur Herstellung von Halogenobisphenolaten von tertiären Aminen nach irgendeinem der Ansprüche 1 bis 7, dadurch gekennzeichnet, dass man zu einer wässrigen Dispersion der Halogenobisphenolverbindung das tertiäre Amin gibt, dann das Ganze während 3 bis 6 Stunden auf eine Temperatur zwischen 50 °C und 100 °C erhitzt, um nach Abkühlung, Filtration, Waschen mit Wasser und Trocknung bei 70 bis 80 °C ein freifliessendes und fast geruchfreies weissliches Pulver zu gewinnen.

9. Verwendung eines latenten Katalysators und Beschleunigers, wie in irgendeinem der Ansprüche 1 bis 7 definiert, in einem Epoxyharzsystem, das als hauptsächlichen Härter ein gegebenenfalls halogeniertes Phenol- oder Cresylnovolak enthält, wobei der Katalysator-Beschleuniger in einer Menge von etwa 0,2 bis 20 Gew.-%, bezogen auf das Gewicht der reaktionsfähigen Bestandteile des Systems, verwendet wird.

10. Verwendung nach Anspruch 9, dadurch gekennzeichnet, dass die reaktionsfähigen Bestandteile wenigstens ein Epoxyharz enthalten, das aus den Epoxyharzen von Bisphenol A, den epoxidierten Phenolnovolaken und den epoxidierten Cresylnovolaken ausgewählt ist.

11. Verwendung nach Anspruch 9 oder 10, dadurch gekennzeichnet, dass das den Katalysator-Beschleuniger enthaltende Epoxyharzsystem in Form eines pulverförmigen, bei Umgebungstemperatur stabilen festen Materials vorliegt, das bei Temperaturen von etwa 150 °C und darüber schnell schmilzt und zu einem harten, durchgehend festen Material härtet.

12. Verwendung nach Anspruch 9 oder 10, dadurch gekennzeichnet, dass das den Katalysator-Beschleuniger enthaltende Epoxyharzsystem in Form einer bei Umgebungstemperatur stabilen Flüssigkeit vorliegt, die bei Temperaturen von etwa 120 °C und darüber schnell zu einem harten Feststoff aushärtet.

## Claims

1. Latent catalysts and accelerators for epoxy systems in which the main hardening agent is an optionally halogenated phenolic or cresylic novolak characterised in that they are waterinsoluble halobisphenates of a catalytically active tertiary amine.

2. Latent catalysts and accelerators according to claim 1 characterised in that the halobisphenolated compound is selected from chloro, bromo. iodo or fluoro derivatives of bisphenol A (diphenylolpropane), bisphenol B (2,2-bis(4-hydroxyphenyl) butane), bisphenol F (bis(4-hydroxyphenyl)methane), 4,4'-dihydroxydiphenyl and 4,4'-dihydroxydiphenylsulphone.

3. Latent catalysts and accelerators according to claim 2 characterised in that the halobisphenolated compound is tetrabromobisphenol A.

4. Latent catalysts and accelerators according to claim 2 characterised in that the halobisphenolated compound is tetrachlorobisphenol A.

5. Latent catalysts and accelerators according to any one of claims 1 to 4 characterised in that the tertiary amine is selected from benzyldimethylamine, 2-(dimethylaminoethyl)phenol, 2,4,6-tris(dimethylaminomethyl)phenol, triethylamine, triethanolamine, triethylene diamine, imidazole, iso-propylimidazole and 2-ethyl-4-methylimidazole.

6. Latent catalysts and accelerators according to any one of claims 1 to 5 characterised in that the phenol equivalent/tertiary amine equivalent molecular ratio is between 1 and 4.

7. Latent catalysts and accelerators according to claim 6 characterised in that the phenol equivalent/tertiary amine equivalent molecular ratio is between 1.25 and 3.

8. A process for the preparation of the halobisphenates of tertiary amines according to any one of claims 1 to 7 characterised in that it comprises adding the tertiary amine to an aqueous dispersion of the halobisphenolated compound, then heating the whole at between 50 °C and 100 °C for a period of from 3 to 6 hours in order, after cooling, filtering, washing with water and drying at 70 to 80 °C, to collect a whitish powder which flows freely and which is approximately odour-free.

9. Use of a latent catalyst and accelerator as defined in any one of claims 1 to 7 in an epoxy resin system containing as main hardening agent an optionally halogenated phenolic or cresylic novolak, said catalyst-accelerator being used in a proportion of about 0.2 to 20% by weight with respect to the weight of the reactive constituents of the system.

10. Use according to claim 9 characterised in that the reactive constituents comprise at least one epoxy resin selected from bisphenol A epoxy resins, epoxidated phenolic novolaks and epoxidated cresylic novolaks.

11. Use according to claim 9 or claim 10 characterised in that the epoxy resin system containing the catalyst- accelerator is in the form of a powdered solid material which is stable at ambient temperature and which melts and hardens rapidly to form a continuous solid material which is hard at temperatures of about 150 °C and above.

12. Use according to claim 9 or claim 10 characterised in that the epoxy resin system containing the catalyst-accelerator is in the form of a liquid which is stable at ambient temperature and which is rapidly hardened to form a solid material which is hard at temperatures of about 120 °C and above.